(19) Europäisches Patentamt
European Patent Office
Office européen des brevets

(11) **EP 3 905 063 A1**

(12) **EUROPEAN PATENT APPLICATION**

(43) Date of publication:
03.11.2021 Bulletin 2021/44

(51) Int Cl.:
*G06F 16/2458* (2019.01)     *G06F 16/26* (2019.01)
*G06F 16/909* (2019.01)     *G06Q 40/00* (2012.01)

(21) Application number: 21163927.3

(22) Date of filing: 22.03.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.04.2020 CN 202010360886

(71) Applicant: Baidu Online Network Technology
(Beijing)
Co., Ltd.
Beijing 100085 (CN)

(72) Inventors:
• HUANG, Jizhou
  Beijing, Beijing 100085 (CN)

• WANG, Haifeng
  Beijing, Beijing 100085 (CN)
• FAN, Miao
  Beijing, Beijing 100085 (CN)
• XIONG, Haoyi
  Beijing, Beijing 100085 (CN)
• ZHUO, An
  Beijing, Beijing 100085 (CN)
• LI, Ying
  Beijing, Beijing 100085 (CN)
• DOU, Dejing
  Beijing, Beijing 100085 (CN)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **METHODS FOR PREDICTING ECONOMIC STATE AND ESTABLISHING ECONOMIC STATE PREDICTION MODEL AND CORRESPONDING APPARATUSES**

(57)    The present disclosure discloses methods for predicting an economic state and establishing an economic state prediction model and corresponding apparatuses, and relates to the technical field of big data. A specific implementation solution is: acquiring, from map application data, geographic location point active data in N historical time frames before a to-be-predicted future time frame respectively for a to-be-predicted region, the N being a positive integer; and inputting feature vectors of the geographic location point active data in the N historical time frames before the to-be-predicted time frame into a pre-trained economic state prediction model, to obtain economic indicator data of the to-be-predicted region in the to-be-predicted time frame. The present disclosure can predict an economic state of the to-be-predicted region in the to-be-predicted time frame, thus providing a reference for policy making in advance.

FIG. 1

## Description

## Field of the Disclosure

The present disclosure relates to the technical field of computer application, and particularly to the technical field of big data.

## Background of the Disclosure

GDP (Gross Domestic Product) and CPI (consumer price index) are important indicators to depict economic conditions. Ideally, economic trends should be obtained in advance, so that countries or regions can take them as important references when formulating relevant policies. For example, the recent rapid outbreak of COVID-19 has affected the economies of many regions and industries to varying degrees in a short period of time. However, in the course of the outbreak, it is difficult to grasp the macro-economic trend in real time.

An existing method for acquiring an economic state can only be based on statistics, such as statistics on actual economic indicators of each quarter. However, this statistical method can only obtain economic conditions of previous periods with a lag, but cannot provide a reference for policy making in advance.

## Summary of the Disclosure

In view of this, the present disclosure provides the following technical solutions to predict an economic state in advance and solves the above problems caused by lagging statistical methods.

In a first aspect, the present disclosure provides a method for predicting an economic state, the method comprising:

acquiring, from map application data, geographic location point active data in N historical time frames before a to-be-predicted future time frame respectively for a to-be-predicted region, the N being a positive integer; and
inputting feature vectors of the geographic location point active data in the N historical time frames before the to-be-predicted time frame into a pre-trained economic state prediction model, to obtain economic indicator data of the to-be-predicted region in the to-be-predicted time frame.

In a second aspect, the present disclosure provides a method for establishing an economic state prediction model, the method comprising:

acquiring, from map application data, geographic location point active data in M consecutive time frames respectively for a to-be-predicted region; and acquiring, from an economic indicator database, actual economic indicator data of the to-be-predicted region in the M time frames respectively, the M being a positive integer greater than 1; and
training a time series model by taking the acquired geographic location point active data and actual economic indicator data in the M consecutive time frames as training data, to obtain an economic state prediction model for the to-be-predicted region;
the economic state prediction model being configured to output, according to geographic location point active data of the to-be-predicted region in N historical time frames before a to-be-predicted future time frame, economic indicator data of to-be-predicted region in the to-be-predicted time frame, the N being a positive integer, M≥N.

In a third aspect, the present disclosure further provides an apparatus for predicting an economic state, the apparatus comprising:

a data acquisition unit configured to acquire, from map application data, geographic location point active data in N historical time frames before a to-be-predicted future time frame respectively for a to-be-predicted region, the N being a positive integer; and
a prediction processing unit configured to input feature vectors of the geographic location point active data in the N historical time frames before the to-be-predicted time frame into a pre-trained economic state prediction model, to obtain economic indicator data of the to-be-predicted region in the to-be-predicted time frame.

In a fourth aspect, the present disclosure further provides an apparatus for establishing an economic state prediction model, the apparatus comprising:

a data acquisition unit configured to acquire, from map application data, geographic location point active data in M consecutive time frames respectively for a to-be-predicted region; and acquire, from an economic indicator database, actual economic indicator data of the to-be-predicted region in the M time frames respectively, the M being a positive integer greater than 1; and
a model training unit configured to train a time series model by taking the acquired geographic location point active data and actual economic indicator data in the M consecutive time frames as training data, to obtain an economic state prediction model for the to-be-predicted region;
the economic state prediction model being configured to output, according to geographic location point active data of the to-be-predicted region in N historical time frames before a to-be-predicted future time frame, economic indicator data of to-be-predicted region in the to-be-predicted time frame, the N being a positive integer, M≥N.

In a fifth aspect, the present disclosure provides an electronic device, comprising:

at least one processor; and
a memory in a communication connection with the at least one processor, wherein
the memory stores instructions executable by the at least one processor, and the instructions are executed by the at least one processor to enable the at least one processor to perform any of the methods described above.

In a sixth aspect, the present disclosure further provides a non-transitory computer-readable memory medium that stores computer instructions, wherein the computer instructions are used to make the computer perform any of the methods described above.

In a seventh aspect, the present disclosure further provides a computer program product comprising instructions which, when the program is executed by a computer, cause the computer to perform any of the methods described above.

It can be seen from the above technical solutions that the present disclosure can predict, according to geographic location point active data of a to-be-predicted region in historical time frames before a to-be-predicted time frame, an economic state of the to-be-predicted region in a to-be-predicted future time frame, thus providing a reference for policy making in advance.

Other effects of the above optional manners will be explained below in combination with specific embodiments.

**Brief Description of Drawings**

The accompanying drawings are intended to better understand the solutions and do not limit the present disclosure. In the drawings,

Fig. 1 is a diagram of time distribution of quarterly GDP, $V^3$ and NVC according to an embodiment of the present disclosure;
Fig. 2 is a flow chart of a method for predicting an economic state according to Embodiment 1 of the present disclosure;
Fig. 3 is a schematic structural diagram of an economic state prediction model according to Embodiment 1 of the present disclosure;
Fig. 4 is a flow chart of a method for establishing an economic state prediction model according to Embodiment 2 of the present disclosure;
Fig. 5 is a schematic diagram of training of the economic state prediction model according to Embodiment 2 of the present disclosure;
Fig. 6 is a structural diagram of an apparatus for predicting an economic state according to Embodiment 3 of the present disclosure;
Fig. 7 is a structural diagram of establishment of an economic state prediction model according to Embodiment 4 of the present disclosure; and
Fig. 8 is a block diagram of an electronic device for implementing an embodiment of the present disclosure.

**Detailed Description of Preferred Embodiments**

Exemplary embodiments of the present disclosure are described below with reference to the accompanying drawings, including various details of the embodiments of the present disclosure to facilitate understanding, and they should be considered as exemplary only. Therefore, those of ordinary skill in the art should be aware that the embodiments described here may be changed and modified in various ways without deviating from the scope and spirit of the present disclosure. Similarly, for the sake of clarity and simplicity, descriptions of well-known functions and structures are omitted in the following description.

After long-term observation and research, it is found that geographic location point active data in the same time interval is obtained from map applications and economic indicator data in the same time interval in the same region is obtained from an economic indicator database. After statistical analysis and comparison, it is found that there is a strong correlation between time distribution of the geographic location point active data and time distribution of the economic indicator data.

For example, statistics is conducted quarterly on the total volume of data of Chinese mainland users' visits to stores in each of nine quarters from the first quarter in 2018 to the first quarter in 2020, denoted as $V^3$ (Volumes of Visits to Venue), on the total number of new stores per quarter registered by Chinese mainland merchants, denoted as NVC (New Venues Created), and on Chinese mainland's real GDP gross per quarter.

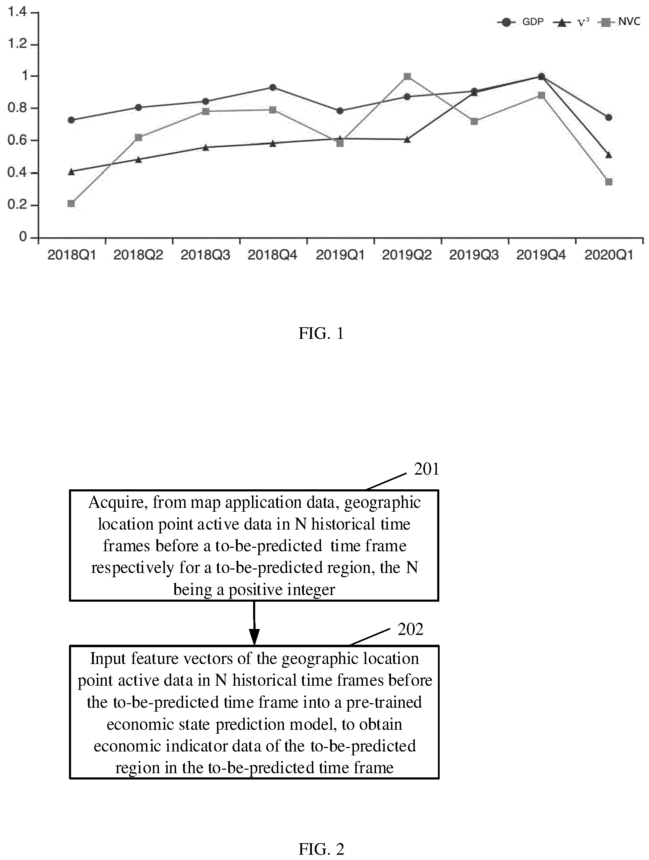

Three sets of data are thus obtained: quarterly GDP, quarterly $V^3$ and quarterly NVC. There are 9 points in each set of data. After all values are normalized, a diagram of time distribution as shown in Fig. 1 is obtained. In Fig. 1, Q1 to Q4 on the horizontal axis refer to the first quarter to the fourth quarter respectively, and the vertical axis represents values of the normalized quarterly GDP, quarterly $V^3$ and quarterly NVC. As can be seen from the figure, there is a strong correlation between GDP and NVC. Through Pearson Correlation Coefficient analysis, a correlation coefficient between GDP and $V^3$ is 81.41%, and a correlation coefficient between GDP and NVC is 82.11%, presenting a strong positive correlation.

Based on the above theory, the core idea of the present disclosure is to use geographic location point active data in map application data to predict economic state data in a future time frame. The methods provided in the present disclosure are described in detail below with reference to embodiments.

**Embodiment 1**

Fig. 2 is a flow chart of a method for predicting an economic state according to Embodiment 1 of the present disclosure. An apparatus performing the method may be a computer device or server that may obtain data maintained by map applications from a map server. Economic indicator data predicted by performing the method may be displayed on the computer device or server, or output to other devices for display. As shown in Fig. 2, the method may include the following steps:

In 201, geographic location point active data in N historical time frames before a to-be-predicted time frame is acquired from map application data respectively for a to-be-predicted region, the N being a positive integer.

The "geographic location point" in the present disclosure refers to geographic location points in the map application data, which may be searched and browsed by users and recommended to the users, etc. The geographic location points have basic attributes such as latitude and longitude, name, administrative address, and type. The geographic location points may include, but are not limited to, POI (Point Of Interest), AOI (Area Of Interest), ROI (Region Of Interest), etc.

The geographic location point active data refers to data that reflects geographic location points being in an active state, and mainly includes: data of users' access to commercial geographic location points, data of newly added commercial geographic location points, data of the users' query of the commercial geographic location points and data of valid commercial geographic location points. Since the commercial geographic location points are more closely related to economic behaviors, active data related to the commercial geographic location points are mainly used in the present disclosure. The commercial geographic location points may be geographic location points with physical stores, such as shopping malls, supermarkets, shops, banks, companies, hotels, and scenic spots. In addition, active data related to non-commercial geographic location points may also be added, such as data related to hospitals and schools.

The data of users' access to commercial geographic location points may include information such as the number of times, time, duration, and frequency of users' visits to commercial physical stores.

The data of newly added commercial geographic location points may be, for example, the number and time of new stores.

The data of the users' query of the commercial geographic location points may include information such as the number of times, time, and frequency of the users' query of the commercial geographic location points on map applications.

The data of valid commercial geographic location points may be information such as the number and positions of commercial geographic location points in a valid state maintained by the map applications. The so-called valid state means that the geographic location points are open as usual and can be accessed as usual.

The to-be-predicted region in the present disclosure may be divided according to administrative divisions or geographical regions. However, as monitoring and planning of an economic state is usually carried out according to administrative divisions, it is preferable to divide the to-be-predicted region according to administrative divisions. For example, the to-be-predicted region may be a country, a province, a city, and so on.

In addition, an objective of the embodiment of the present disclosure is to predict an economic condition of a to-be-predicted region in a to-be-predicted future time frame by using geographic location point active data in historical time frames before the to-be-predicted time frame. The duration of the historical time frames may be a preset value. For example, if an economic state of a province in the next year is predicted, geographic location point active data of the province in the current year and the previous 9 years (10 years in total) can be used. For another example, if an economic state of a province in the next month is predicted, geographic location point active data of the province in the current month and the previous nine months (10 months in total) can be used, and so on. Since geographic location point active data in the current time frame can be obtained, the current time frame can also be regarded as a historical time frame of the to-be-predicted future time frame.

In 202, feature vectors of the geographic location point active data in the N historical time frames before the to-be-predicted time frame are inputted into a pre-trained economic state prediction model, to obtain economic indicator data of the to-be-predicted region in the to-be-predicted time frame.

In this step, feature vectors of the geographic location point active data in the historical time frames are determined respectively, that is, N feature vectors are determined. Assuming that the to-be-predicted future time frame is expressed as t+1, a feature vector of the geographic location point active data in the current time frame is expressed as $x_t$, and feature vectors of the geographic location point active data in previous N-1 historical time frames are expressed as $x_{t-N+1}$, ... and $x_{t-1}$ respectively, $x_{t-N+1}$, ..., $x_{t-1}$ and $x_t$ are inputted to the economic state prediction model.

The feature vectors of the geographic location point active data may include various types of geographic location point active data, which may be integrated into a form of vector for representation.

The economic state prediction model in the embodiment of the present disclosure uses a time series model to pre-establish a positive correlation between time distribution of the geographic location point active data and time distribution of the economic indicator data. The training process of the economic state prediction model will be subsequently described in detail through Embodiment 2.

The economic indicator data outputted by the economic state prediction model may include at least one of the following: GDP, PMI (Purchasing Managers Index) and CPI, which may be outputted in the form of vectors. Assuming that the to-be-predicted time frame is expressed as $t + 1$, a vector of the economic indicator data of the to-be-predicted time frame is expressed as $y_{t+1}$.

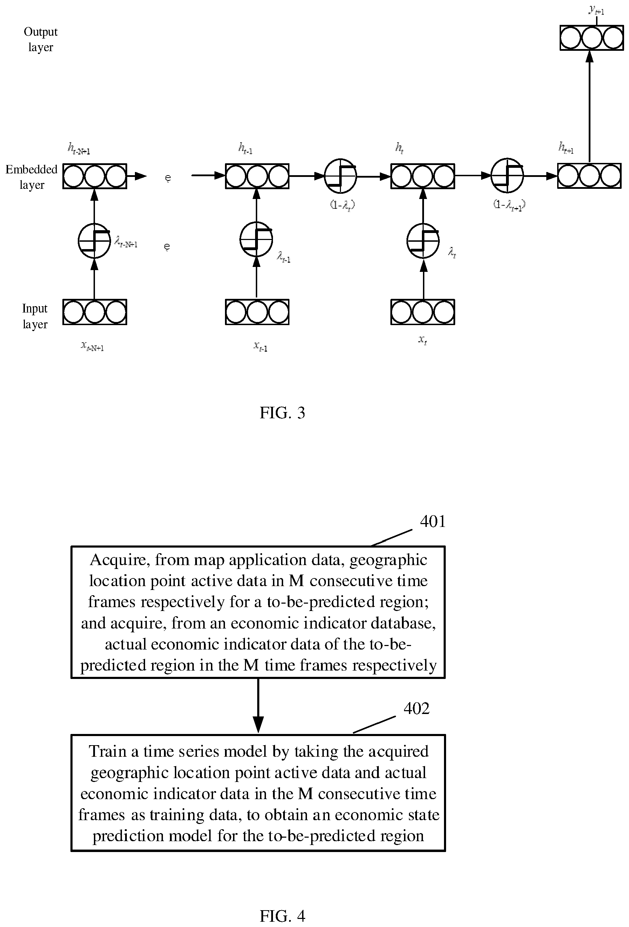

A structure of an economic state prediction model provided in the present embodiment is described in detail below. As shown in Fig. 3, the economic state prediction model may include: an input layer, an embedded layer and a prediction layer.

The input layer is configured to output representations of the feature vectors of the geographic location point active data in the N historical time frames before the to-be-predicted time frame to the embedded layer. As shown in Fig. 3, $x_{t-N+1}, ..., x_{t-1}$ and $x_t$ are inputted to the embedded layer.

The embedded layer is configured to weight an inputted feature vector $x_i$ of geographic location point active data in the $i^{th}$ time frame and an embedded layer vector $h_{i-1}$ corresponding to the $i$-$1^{th}$ time frame to obtain an embedded layer vector $h_i$ corresponding to the $i^{th}$ time frame, wherein the $i^{th}$ time frame is taken respectively from the time periods in the N historical time frames in chronological order; and multiply an embedded layer vector corresponding to a time frame before the to-be-predicted time frame by a weighting coefficient to obtain an embedded layer vector corresponding to the to-be-predicted time frame.

In the embedded layer, embedded layer vectors are calculated for the inputted feature vectors of the time frames respectively according to a time series before the to-be-predicted time frame (i.e., for the current time frame and N-1 time frames before the current time frame). In addition to being correlated with the inputted vector $x_i$ of the time frame, an embedded layer vector corresponding to a time frame i is further correlated with the embedded layer vector $h_{i-1}$ of the previous time frame $i$-$1$. A specific calculation manner may be:

$$h_i = h_{i-1}(1 - \lambda_i) + U^{l \times k} x_i \lambda_i \qquad (1)$$

where $U^{l \times k}$ is a parameter array, for transforming $x_i$ to be dimensionally consistent with the embedded layer vector, $k$ is the dimension of $x_i$, and $l$ is the dimension of the embedded layer vector. $\lambda_i$ is a weighting coefficient, which is correlated with the inputted feature vector $x_i$, and may employ the following formula:

$$\lambda_i = \log\left(\frac{1}{1 + \exp - (w^T x_i + b)}\right) \qquad (2)$$

where $w$ is a k-dimension parameter vector, and $b$ is a scalar. $\lambda_i \in (0,1)$, which is a scalar.

For the to-be-predicted time frame $t + 1$, its embedded layer vector $h_{t+1}$ is correlated only with the embedded layer vector $h_t$ corresponding to the previous time frame t. A specific calculation manner may be:

$$h_{t+1} = h_t(1 - \lambda_{t+1}) \qquad (3)$$

$\lambda_{t+1}$ may also be calculated by using the formula (2), provided that each value of the vector $x_{t+1}$ is 0 in this case.

The embedded layer sequentially calculates a corresponding embedded layer vector for each time frame according to a time series.

The prediction layer is configured to obtain the economic indicator data in the to-be-predicted time frame by mapping according to the embedded layer vector corresponding to the to-be-predicted time frame.

As shown in Fig. 3, if the to-be-predicted time frame is expressed as t+1, the vector representation $y_{t+1}$ of the economic indicator data of the to-be-predicted time frame may be obtained from the following formula:

$$y_{t+1} = V h_{t+1} \qquad (4)$$

where the vector dimension of $y_{t+1}$ is $m$, and the dimension of the parameter matrix $V$ is m $\times$ l.

$U^{l \times K}$, V, $w$ and $b$ are all model parameters of the economic state prediction model, and are obtained by pre-training during model training.

In addition, when the economic state of the to-be-predicted region in the to-be-predicted time frame is predicted, the to-be-predicted region may also be divided according to the industry. For example, if an economic state of an industry in the to-be-predicted region in the to-be-predicted time frame is predicted, geographic location point active data related to the industry is acquired during acquisition of the geographic location point active data. That is to say, geographic location point types can be associated with industries. For example, when an economic state of a tourism industry is predicted, geographic location point active data of types such as hotels, guesthouses, and scenic spots may be acquired. For example, when an economic state of a retail industry is predicted, geographic location point active data of types such as shopping malls, supermarkets and convenience stores may be acquired.

The following application scenarios may be implemented in the manner provided in the present embodiment:

Scenario 1:
It is currently April 2020. Geographic location point active data such as $V^3$ data and NVC data of a province from July 2019 to April 2020, NVC data is collected and inputted into an economic state prediction model pre-established for the province, a GDP indicator of the province in May 2020 can be predicted.

It is unnecessary to acquire the GDP indicator with a lag by economic data statistics after May.

Scenario 2:

It is currently April 2020. GDP produced by the tourism industry all over China in May 2020 can be predicted by collecting V³ data and NVC data in categories such as hotels, guesthouses, scenic spots and restaurants from July 2019 to April 2020 and inputting the data into an economic state prediction model pre-established for the whole of China.

Embodiment 2

Fig. 4 is a flow chart of a method for establishing an economic state prediction model according to Embodiment 2 of the present disclosure. As shown in Fig. 4, the method may include the following steps:

In 401, geographic location point active data in M consecutive time frames are acquired from map application data respectively for a to-be-predicted region; and actual economic indicator data of the to-be-predicted region in the M time frames are acquired from an economic indicator database respectively, the M being a positive integer greater than 1.

Since the economic state prediction model is established for a specific region, to-be-predicted geographic location point active data and actual economic indicator data need to be acquired to serve as training data during training data acquisition.

The map application data may be acquired or called from a map application server or database. The actual economic indicator data may be acquired from an economic indicator database in which actual economic indicator data of each region in each time frame is recorded. The actual economic indicator data may be actual data obtained based on economic data statistics.

Similar to that in Embodiment 1, the geographic location point active data refers to data that reflects geographic location points being in an active state, and mainly includes: data of users' access to commercial geographic location points, data of newly added commercial geographic location points, data of the users' query of the commercial geographic location points and data of valid commercial geographic location points.

The economic indicator data outputted by the economic state prediction model may include at least one of the following: GDP, PMI and CPI.

The to-be-predicted region in the present disclosure may be divided according to administrative divisions or geographical regions. However, as monitoring and planning of an economic state is usually carried out according to administrative divisions, it is preferable to divide the to-be-predicted region according to administrative divisions. For example, the to-be-predicted region may be a country, a province, a city, and so on.

During actual use, types of geographic location point active data and economic indicator data used in establishment of a model need to be consistent with types of geographic location point active data and economic indicator data used in prediction with the model. A region for which the model is established also needs to be consistent with a region for which the prediction is performed.

For example, V³ data, NVC data and GDP data from January to November 2018 throughout the country are taken as one piece of training data, V³ data, NVC data and GDP data from February to December 2018 throughout the country are taken as one piece of training data, V³ data, NVC data and GDP data from March 2018 to January 2019 throughout the country are taken as one piece of training data, and so on. A plurality of pieces of training data can be constructed.

In 402, a time series model is trained by taking the acquired geographic location point active data and actual economic indicator data in the M consecutive time frames as training data, to obtain an economic state prediction model for the to-be-predicted region.

The training process is actually a training process during which the economic state prediction model learns a positive correlation between time distribution of the geographic location point active data and time distribution of the economic indicator data.

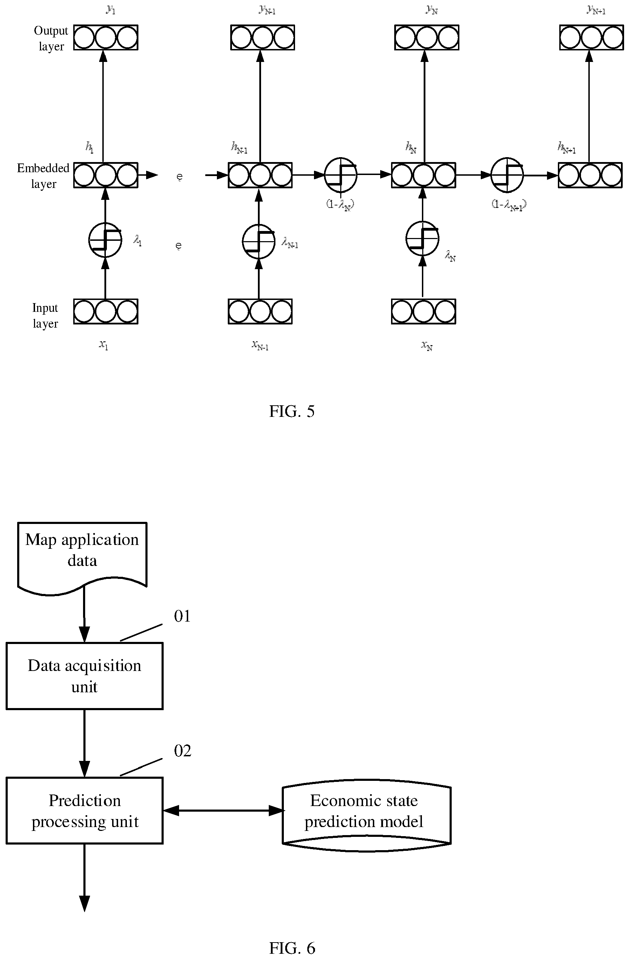

Similarly, as shown in Fig. 5, the time series model employed by the economic state prediction model may include: an input layer, an embedded layer and a prediction layer.

The input layer is configured to output feature vectors of the geographic location point active data in the time frames in the training data to the embedded layer.

In the training of the economic state prediction model, the number of time frames used in the training data needs to be consistent with the number of time frames used in the prediction with the model. If the prediction described in Embodiment 1 is to be achieved, the number of time frames for each training sample is N+1. That is, geographic location point active data and actual economic indicator data in each N+1 consecutive time frames are taken as a training sample. Since economic indicator data in the N+1$^{th}$ time frame is predicted by using the geographic location point active data in N consecutive time frames, as shown in Fig. 5, the first to N$^{th}$ inputted feature vectors for N time frames may be expressed as $x_1$, ... and $x_N$ respectively and outputted to the embedded layer according to a time series.

The embedded layer is configured to weight an inputted feature vector $x_i$ of geographic location point active data in the $i^{th}$ time frame and an embedded layer vector $h_{i-1}$ corresponding to the $i-1^{th}$ time frame to obtain an embedded layer vector $h_i$ corresponding to the $i^{th}$ time frame, wherein the $i^{th}$ time frame is taken respectively from the time frames before the target time frame in the training data in chronological order; and multiply an embedded layer vector corresponding to a time frame before the target time frame by a weighting coefficient to obtain an embedded layer vector corresponding to the target time frame.

As described above, a training sample includes N+1 time frames. Geographic location point active data in the first N time frames in a training sample is used for training, and the target time frame is the N+1th time frame.

Calculation methods for $h_i$ and $\lambda_i$ corresponding to the first N time frames may be obtained with reference to the formula (1) and the formula (2) in Embodiment 1, which are not described in detail here.

A calculation method for $h_i$ of the N+1th time frame, that is, the target time frame, may be obtained with reference to the formula (3) in Embodiment 1.

For each time frame, a corresponding embedded layer vector can be calculated and outputted to the prediction layer.

The prediction layer is configured to obtain economic indicator data in the target time frame by mapping according to the embedded layer vector corresponding to the target time frame.

The economic indicator data $y_{N+1}$ corresponding to the target time frame may be obtained by using the following formula:

$$y_{N+1} = V h_{N+1} \qquad (5)$$

where the meaning of $V$ is the same as that of $V$ in the formula (4) in Embodiment 1, which is not described in detail.

The economic indicator data for another time frame i other than the target time frame may also be calculated by using a formula similar to the formula (5), and a difference only lies in that embedded layer vectors are calculated in different manners in the embedded layer for the target time frame and other time frames.

After calculation, the economic indicator data predicted by the prediction layer can be calculated for each time frame (including the to-be-predicted time frame), and the actual economic indicator data is available for each time frame in the training data. Therefore, during model training, a difference between the economic indicator data obtained by the prediction layer and the corresponding actual economic indicator data in the training data can be minimized.

A loss function may be constructed by using the above difference, and model parameters are optimized by using the value of the loss function. The model parameters involved include $U^{l \times k}$, $V$, $w$ and $b$. Specifically, the prediction layer may output the economic indicator data predicted for each time frame, that is, a loss function is available for each time frame, and the model parameters are optimized by using the value of the loss function for each time frame. After the training, the economic state prediction model as shown in Fig. 3 can be obtained.

The above are detailed description of the methods provided in the present disclosure. The apparatuses provided in the present disclosure are described in detail below with reference to embodiments.

Embodiment 3

Fig. 6 is a structural diagram of an apparatus for predicting an economic state according to Embodiment 3 of the present disclosure. The apparatus may be located in an application of a computer device, or a functional unit such as a plug-in or Software Development Kit (SDK) in the application of the computer device, or located in a server, which is not specifically limited in the embodiment of the present disclosure. The apparatus includes: a data acquisition unit 01 and a prediction processing unit 02. Main functions of various component units are as follows:

The data acquisition unit 01 is configured to acquire, from map application data, geographic location point active data in a to-be-predicted time frame and N historical time frames before the to-be-predicted time frame respectively for a to-be-predicted region, the N being a positive integer.

The prediction processing unit 02 is configured to input feature vectors of the geographic location point active data in the N historical time frames before the to-be-predicted time frame into a pre-trained economic state prediction model, to obtain economic indicator data of the to-be-predicted region in the to-be-predicted time frame.

The economic state prediction model uses a time series model to establish a positive correlation between time distribution of the geographic location point active data and time distribution of the economic indicator data.

Specifically, the economic state prediction model includes: an input layer, an embedded layer and a prediction layer.

The input layer is configured to output representations of the feature vectors of the geographic location point active data in the N historical time frames before the to-be-predicted time frame to the embedded layer.

The embedded layer is configured to weight an inputted feature vector $x_i$ of geographic location point active data in the $i$th time frame and an embedded layer vector $h_{i-1}$ corresponding to the $i$-1th time frame to obtain an embedded layer vector $h_i$ corresponding to the $i$th time frame, wherein the $i$th time frame is taken respectively from the time periods in the N historical time frames in chronological order; and multiply an embedded layer vector corresponding to a time frame before the to-be-predicted time frame by a weighting coefficient to obtain an embedded layer vector corresponding to the to-be-predicted time frame.

The prediction layer is configured to obtain the economic indicator data in the to-be-predicted time frame by mapping according to the embedded layer vector corresponding to the to-be-predicted time frame.

The geographic location point active data includes at least one of the following: data of users' access to commercial geographic location points, data of newly added commercial geographic location points, data of the users' query of the commercial geographic location points and data of valid commercial geographic location points.

The economic indicator data includes at least one of the following: GDP, PMI and CPI.

When the apparatus predicts the economic state of the to-be-predicted region in the to-be-predicted time frame, the to-be-predicted region may also be divided according to the industry. For example, if an economic state of an industry in the to-be-predicted region in the to-be-predicted time frame is predicted, the data acquisition unit 01 acquires geographic location point active data related to the industry when acquiring the geographic location point active data. That is to say, geographic location point types can be associated with industries. For example, when an economic state of a tourism industry is predicted, geographic location point active data of types such as hotels, guesthouses, and scenic spots may be acquired. For example, when an economic state of a retail industry is predicted, geographic location point active data of types such as shopping malls, supermarkets and convenience stores may be acquired.

Embodiment 4

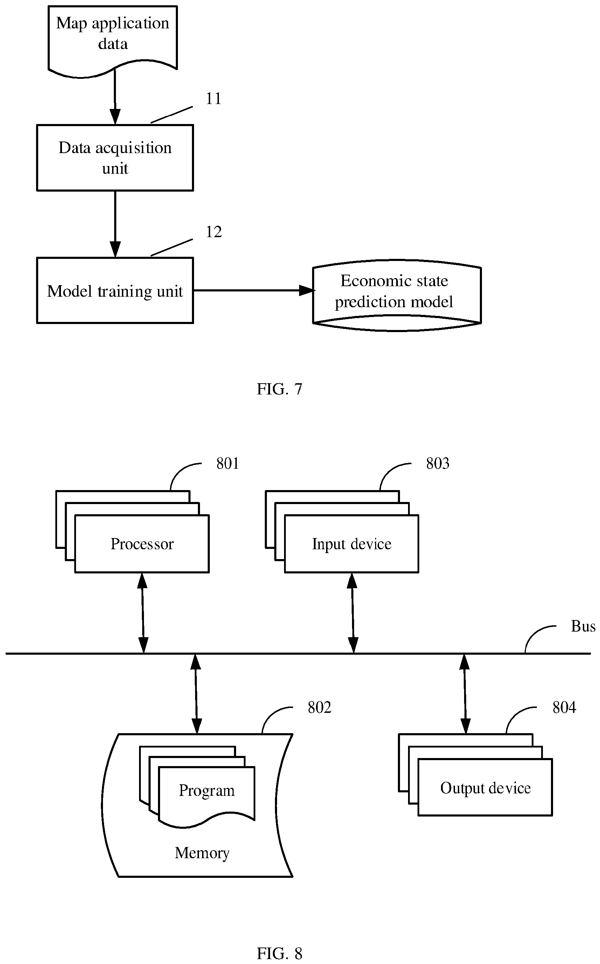

Fig. 7 is a structural diagram of establishment of an economic state prediction model according to Embodiment 4 of the present disclosure. The apparatus may be located in an application of a computer device, or a functional unit such as a plug-in or Software Development Kit (SDK) in the application of the computer device, or located in a server, which is not specifically limited in the embodiment of the present disclosure. The apparatus includes: a data acquisition unit 11 and a model training unit 12. Main functions of various component units are as follows:

The data acquisition unit 11 is configured to acquire, from map application data, geographic location point active data in M consecutive time frames respectively for a to-be-predicted region; and acquire, from an economic indicator database, actual economic indicator data of the to-be-predicted region in the M time frames respectively, the M being a positive integer greater than 1.

The model training unit 12 is configured to train a time series model by taking the acquired geographic location point active data and actual economic indicator data in the M consecutive time frames as training data, to obtain an economic state prediction model for the to-be-predicted region.

The economic state prediction model is configured to output, according to geographic location point active data of the to-be-predicted region in N historical time frames before a to-be-predicted future time frame, economic indicator data of to-be-predicted region in the to-be-predicted time frame, the N being a positive integer, M≥N.

The economic state prediction model learns a positive correlation between time distribution of geographic location point active data and time distribution of economic indicator data during the training.

Specifically, the economic state prediction model may include: an input layer, an embedded layer and a prediction layer.

The input layer is configured to select, from the training data, a plurality of time frames as a target time frame, and output feature vectors of the geographic location point active data in the time frames in the training data to the embedded layer.

The embedded layer is configured to weight an inputted feature vector $x_i$ of geographic location point active data in the $i^{th}$ time frame and an embedded layer vector $h_{i-1}$ corresponding to the $i$-$1^{th}$ time frame to obtain an embedded layer vector $h_i$ corresponding to the $i^{th}$ time frame, wherein the $i^{th}$ time frame is taken respectively from the time frames before the target time frame in the training data in chronological order; and multiply an embedded layer vector corresponding to a time frame before the target time frame by a weighting coefficient to obtain an embedded layer vector corresponding to the target time frame.

The prediction layer is configured to obtain economic indicator data in the target time frame by mapping according to the embedded layer vector corresponding to the target time frame.

A training goal of the economic state prediction model is to minimize a difference between the economic indicator data obtained by the prediction layer and the corresponding actual economic indicator data in the training data.

In addition, in the prediction layer, except for the target time frame, the economic indicator data of each time frame can also be obtained by mapping according to the embedded vector corresponding to each time frame. That is to say, the economic indicator data predicted by the prediction layer can be calculated for each time frame (including the target time frame), and the actual economic indicator data is available for each time frame in the training data. Therefore, during model training, a difference between the economic indicator data obtained by the prediction layer and the corresponding actual economic indicator data in the training data can be minimized. Specifically, the prediction layer may output the economic indicator data predicted for each time frame, that is, a loss function is available for each time frame, and model parameters are optimized by using the value of the loss function for each time frame. After the training, the economic state prediction model as shown in Fig. 3 can be obtained.

The geographic location point active data includes at least one of the following: data of users accessing commercial geographic location points, data of newly added commercial geographic location points, data of users inquiring commercial geographic location points and data of valid commercial geographic location points.

The economic indicator data includes at least one of the following: GDP, PMI and CPI.

According to an embodiment of the present disclosure, the present disclosure further provides an electronic device and a readable storage medium.

As shown in Fig. 8, it is a block diagram of an electronic device of methods for predicting an economic state and establishing an economic state prediction model according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistant, cellular phones, smart phones, wearable devices and other similar computing devices. The components, their connections and relationships, and their functions shown herein are examples only, and are not intended to limit the implementation of the present disclosure as described and/or required herein.

As shown in Fig. 8, the electronic device includes: one or more processors 801, a memory 802, and interfaces for connecting various components, including high-speed and low-speed interfaces. The components are connected to each other by using different buses and may be mounted on a common motherboard or otherwise as required. The processor may process instructions executed in the electronic device, including instructions stored in the memory or on the memory to display graphical information of a GUI on an external input/output apparatus (such as a display device coupled to the interfaces). In other implementation modes, multiple processors and/or buses may be used together with multiple memories if necessary. Similarly, multiple electronic devices may be connected, each of which provides some necessary operations (for example, as a server array, a set of blade servers, or a multiprocessor system). One processor 801 is taken as an example is Fig. 8.

The memory 802 is the non-transitory computer-readable storage medium provided in the present disclosure. The memory stores instructions executable by at least one processor to make the at least one processor perform the methods for predicting an economic state and establishing an economic state prediction model provided in the present disclosure. The non-transitory computer-readable storage medium in the present disclosure stores computer instructions. The computer instructions are used to make a computer perform the methods for predicting an economic state and establishing an economic state prediction model provided in the present disclosure.

The memory 802, as a non-transitory computer-readable storage medium, may be configured to store non-transitory software programs, non-transitory computer executable programs and modules, for example, program instructions/modules corresponding to the methods for predicting an economic state and establishing an economic state prediction model provided in the present disclosure. The processor 801 runs the non-transitory software programs, instructions and modules stored in the memory 802 to execute various functional applications and data processing of a server, that is, to implement the methods for predicting an economic state and establishing an economic state prediction model in the above method embodiments.

The memory 802 may include a program storage area and a data storage area. The program storage area may store an operating system and an application required by at least one function; and the data storage area may store data created according to use of the electronic device. In addition, the memory 802 may include a high-speed random access memory, and may further include a non-transitory memory, for example, at least one disk storage device, a flash memory device, or other non-transitory solid-state storage devices. In some embodiments, the memory 802 optionally includes memories remotely disposed relative to the processor 801. The remote memories may be connected to the electronic device over a network. Examples of the network include, but are not limited to, the Internet, intranets, local area networks, mobile communication networks and combinations thereof.

The electronic device may further include: an input device 803 and an output device 804. The processor 801, the memory 802, the input device 803 and the output device 804 may be connected through a bus or in other manners. In Fig. 8, the connection through a bus is taken as an example.

The input device 803 may receive input numerical information or character information, and generate key signal input related to user setting and function control of the electronic device, for example, input devices such as a touch screen, a keypad, a mouse, a trackpad, a touch pad, a pointer, one or more mouse buttons, a trackball, and a joystick. The output device 804 may input a display device, an auxiliary lighting device (e.g., an LED) and a tactile feedback device (e.g., a vibration motor). The display device may include, but is not limited to, a liquid crystal display (LCD), a light-emitting diode (LED) display and a plasma display. In some implementation modes, the display device may be a touch screen.

Various implementation modes of the systems and technologies described here can be implemented in a digital electronic circuit system, an integrated circuit system, an ASIC (application-specific integrated circuit), computer hardware, firmware, software, and/or combinations thereof. The various implementation modes may include: being implemented in one or more computer programs, wherein the one or more computer programs may be executed and/or interpreted on a programmable system including at least one programmable processor, and the programmable processor may be a special-purpose or general-purpose programmable processor, receive data and instructions from a storage system, at least one input device and at least one output device, and transmit the data and the instructions to the storage system, the at least one input device and the at least one output device.

The computing programs (also referred to as programs, software, software applications, or code) include machine instructions for programmable processors, and may be implemented by using high-level procedural and/or object-oriented programming languages, and/or assembly/machine languages. As used herein, the terms "machine-readable medium" and "computer-readable medium" refer to any computer program product, device, and/or apparatus (e.g., a magnetic disk, an optical disc, a memory, and a programmable logic device (PLD)) configured to provide machine instructions and/or data to a programmable processor, including a machine-readable medium that receives machine instructions serving as machine-readable signals. The term "machine-readable signal" refers to any signal for providing the machine instructions and/or data to the programmable processor.

To provide interaction with a user, the systems and technologies described here can be implemented on a computer. The computer has: a display device (e.g., a CRT (cathode-ray tube) or an LCD (liquid crystal display) monitor) for displaying information to the user; and a keyboard and pointing device (e.g., a mouse or trackball) through which the user may provide input for the computer. Other kinds of apparatuses may also be configured to provide interaction with the user. For example, a feedback provided for the user may be any form of sensory feedback (for example, visual, auditory, or tactile feedback); and input from the user may be received in any form (including sound input, voice input, or tactile input).

The systems and technologies described here can be implemented in a computing system including background components (for example, as a data server), or a computing system including middleware components (for example, an application server), or a computing system including front-end components (for example, a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (for example, a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other.

It should be understood that the steps can be reordered, added, or deleted by using the various forms of processes shown above. For example, the steps described in the present disclosure may be executed in parallel or sequentially or in different sequences, provided that the desired results of the technical solutions disclosed in the present disclosure can be achieved, which are not limited herein.

The above specific implementation mode does not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

**Claims**

1. A method for predicting an economic state, wherein the method comprises:

   acquiring (201), from map application data, geographic location point active data in N historical time frames before a to-be-predicted future time frame respectively for a to-be-predicted region, the N being a positive integer; and
   inputting (202) feature vectors of the geographic location point active data in the N historical time frames before the to-be-predicted time frame into a pre-trained economic state prediction model, to obtain economic indicator data of the to-be-predicted region in the to-be-predicted time frame.

2. The method according to claim 1, wherein the economic state prediction model uses a time series model to establish a strong correlation between time distribution of the geographic location point active data and time distribution of the economic indicator data.

3. The method according to claim 2, wherein the economic state prediction model comprises: an input layer, an embedded layer and a prediction layer;
   the input layer is configured to output representations of the feature vectors of the geographic location point active data in the N historical time frames before the to-be-predicted time frame to the embedded layer;
   the embedded layer is configured to weight an inputted feature vector $x_i$ of geographic location point active data in the $i^{th}$ time frame and an embedded layer vector $h_{i-1}$ corresponding to the $i\text{-}1^{th}$ time frame to obtain an embedded layer vector $h_i$ corresponding to the $i^{th}$ time frame, wherein the $i^{th}$ time frame is taken respectively from the time periods in the N historical time frames in chronological order; and multiply an embedded layer vector corresponding to a time frame before the to-be-predicted time frame by a weighting coefficient to obtain an embedded layer vector corresponding to the to-be-predicted time frame; and

the prediction layer is configured to obtain the economic indicator data in the to-be-predicted time frame by mapping according to the embedded layer vector corresponding to the to-be-predicted time frame.

4.   The method according to any one of claims 1 to 3, wherein the geographic location point active data comprises at least one of the following:

data of users' access to commercial geographic location points, data of newly added commercial geographic location points, data of the users' query of the commercial geographic location points and data of valid commercial geographic location points; and
the economic indicator data comprises at least one of the following:
Gross Domestic Product (GDP), purchasing managers index (PMI) and consumer price index (CPI).

5.   The method according to any one of claims 1 to 3, wherein the geographic location point active data is geographic location point active data of a geographic location point type corresponding to a particular industry; and
the economic indicator data obtained is economic indicator data for the particular industry.

6.   A method for establishing an economic state prediction model, wherein the method comprises:

acquiring (401), from map application data, geographic location point active data in M consecutive time frames respectively for a to-be-predicted region; and acquiring, from an economic indicator database, actual economic indicator data of the to-be-predicted region in the M time frames respectively, the M being a positive integer greater than 1; and
training (402) a time series model by taking the acquired geographic location point active data and actual economic indicator data in the M consecutive time frames as training data, to obtain an economic state prediction model for the to-be-predicted region;
the economic state prediction model being configured to output, according to geographic location point active data of the to-be-predicted region in N historical time frames before a to-be-predicted future time frame, economic indicator data of to-be-predicted region in the to-be-predicted time frame, the N being a positive integer, M≥N.

7.   The method according to claim 6, wherein the economic state prediction model learns a strong correlation between time distribution of the geographic location point active data and time distribution of the economic indicator data during the training.

8.   The method according to claim 7, wherein the economic state prediction model comprises: an input layer, an embedded layer and a prediction layer;
the input layer is configured to select, from the training data, a plurality of time frames as a target time frame, and output feature vectors of the geographic location point active data in the time frames in the training data to the embedded layer;
the embedded layer is configured to weight an inputted feature vector $x_i$ of geographic location point active data in the $i^{th}$ time frame and an embedded layer vector $h_{i-1}$ corresponding to the $i$-$1^{th}$ time frame to obtain an embedded layer vector $h_i$ corresponding to the $i^{th}$ time frame, wherein the $i^{th}$ time frame is taken respectively from the time frames before the target time frame in the training data in chronological order; and multiply an embedded layer vector corresponding to a time frame before the target time frame by a weighting coefficient to obtain an embedded layer vector corresponding to the target time frame; and
the prediction layer is configured to obtain economic indicator data in the target time frame by mapping according to the embedded layer vector corresponding to the target time frame; and
a training goal of the economic state prediction model is to minimize a difference between the economic indicator data obtained by the prediction layer and the corresponding actual economic indicator data in the training data.

9.   The method according to any one of claims 6 to 8, wherein the geographic location point active data comprises at least one of the following:

data of users' access to commercial geographic location points, data of newly added commercial geographic location points, data of the users' query of the commercial geographic location points and data of valid commercial geographic location points; and
the economic indicator data comprises at least one of the following:
Gross Domestic Product (GDP), purchasing managers index (PMI) and consumer price index (CPI).

10.  An apparatus for predicting an economic state, wherein the apparatus comprises:

a data acquisition unit (01) configured to acquire, from map application data, geographic location point active data in N historical time frames before a to-be-predicted future time frame respectively for a to-be-predicted region, the N being a positive integer; and

a prediction processing unit (02) configured to input feature vectors of the geographic location point active data in the N historical time frames before the to-be-predicted time frame into a pre-trained economic state prediction model, to obtain economic indicator data of the to-be-predicted region in the to-be-predicted time frame.

11. The apparatus according to claim 10, wherein the economic state prediction model uses a time series model to establish a strong correlation between time distribution of the geographic location point active data and time distribution of the economic indicator data.

12. An apparatus for establishing an economic state prediction model, wherein the apparatus comprises:

a data acquisition unit (11) configured to acquire, from map application data, geographic location point active data in M consecutive time frames respectively for a to-be-predicted region; and acquire, from an economic indicator database, actual economic indicator data of the to-be-predicted region in the M time frames respectively, the M being a positive integer greater than 1; and

a model training unit (12) configured to train a time series model by taking the acquired geographic location point active data and actual economic indicator data in the M consecutive time frames as training data, to obtain an economic state prediction model for the to-be-predicted region;

the economic state prediction model being configured to output, according to geographic location point active data of the to-be-predicted region in N historical time frames before a to-be-predicted future time frame, economic indicator data of to-be-predicted region in the to-be-predicted time frame, the N being a positive integer, $M \geq N$.

13. An electronic device, comprising:

at least one processor; and
a memory in a communication connection with the at least one processor, wherein
the memory stores instructions executable by the at least one processor, and the instructions are executed by the at least one processor to enable the at least one processor to perform the method according to any one of claims 1 to 9.

14. A non-transitory computer-readable memory medium that stores computer instructions, wherein the computer instructions are used to make the computer perform the method according to any one of claims 1 to 9.

15. A computer program product comprising instructions which, when the program is executed by a computer, cause the computer to perform the method according to any one of claims 1 to 9.

FIG. 1

FIG. 2

Output
layer

Embedded
layer

Input
layer

$y_{t+1}$

$h_{t-N+1}$   $h_{t-1}$   $h_t$   $h_{t+1}$

$(1-\lambda_t)$   $(1-\lambda_{t+1})$

$\lambda_{t-N+1}$   $\lambda_{t-1}$   $\lambda_t$

$x_{t-N+1}$   $x_{t-1}$   $x_t$

FIG. 3

401

Acquire, from map application data, geographic
location point active data in M consecutive time
frames respectively for a to-be-predicted region;
and acquire, from an economic indicator database,
actual economic indicator data of the to-be-
predicted region in the M time frames respectively

402

Train a time series model by taking the acquired
geographic location point active data and actual
economic indicator data in the M consecutive time
frames as training data, to obtain an economic state
prediction model for the to-be-predicted region

FIG. 4

FIG. 5

FIG. 6

Map application
data

Data acquisition
unit

11

Model training unit

12

Economic state
prediction model

FIG. 7

Processor

801

Input device

803

Bus

Program

Memory

802

Output device

804

FIG. 8

Europäisches
Patentamt

European
Patent Office

Office européen
des brevets

## EUROPEAN SEARCH REPORT

Application Number

EP 21 16 3927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/034931 A1 (D AGOSTINO MARK [US] ET AL) 4 February 2016 (2016-02-04) * abstract * * paragraphs [0013] - [0018], [0053] - [0059]; figure 5 * ----- | 1-15 | INV. G06F16/2458 G06F16/26 G06F16/909 G06Q40/00 |
| X | EP 2 821 953 A1 (KONCHITCHKI YANIV [US]; PATATOUKAS PANOS N [US]) 7 January 2015 (2015-01-07) * abstract * * paragraphs [0003] - [0013], [0050] - [0076]; figure 4 * ----- | 1-15 | |

TECHNICAL FIELDS
SEARCHED (IPC)

G06F
G06Q

The present search report has been drawn up for all claims

| Place of search | Date of completion of the search | Examiner |
|---|---|---|
| Berlin | 30 August 2021 | Siódmok, Wojciech |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 3927

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2021

| Patent document cited in search report | Publication date | Patent family member(s) | Publication date |
|---|---|---|---|
| US 2016034931 A1 | 04-02-2016 | US 2016034931 A1<br>WO 2016019082 A1 | 04-02-2016<br>04-02-2016 |
| EP 2821953 A1 | 07-01-2015 | EP 2821953 A1<br>US 2015006435 A1<br>WO 2015002886 A2 | 07-01-2015<br>01-01-2015<br>08-01-2015 |

EPO FORM P0459

For more details about this annex : see Official Journal of the European Patent Office, No. 12/82